# EUROPÄISCHE PATENTSCHRIFT

(11) **EP 2 436 899 B1**
(45) Veröffentlichungstag und Bekanntmachung des Hinweises auf die Patenterteilung: **23.03.2016**
(21) Anmeldenummer: 11007827.6
(22) Anmeldetag: 27.09.2011
(51) Int. Cl.: F02D 41/02, F02D 41/14

(54) **Verfahren zum Betreiben einer Verbrennungskraftmaschine sowie zur Ausführung des Verfahrens eingerichtetes Steuergerät**
Method for operating a combustion engine and device for implementing the method
Procédé de fonctionnement d'un moteur à combustion interne et appareil de commande pour l'exécution du procédé

(30) Priorität: 02.10.2010 DE 102010047415
(43) Veröffentlichungstag der Anmeldung: 04.04.2012
(73) Patentinhaber: Volkswagen Aktiengesellschaft, 38440 Wolfsburg (DE)
(72) Erfinder: Klingemann, Timo, 38547 Calberlah (DE); Mork, Aiko, 38536 Meinersen (DE); Ness, Eike, 30625 Hannover (DE)
(74) Vertreter: Löbbecke, Carsten

(56) Entgegenhaltungen:
- EP-A1- 2 148 049
- DE-A1-102006 017 300
- DE-A1-102008 009 672
- DE-A1-102008 036 127
- JP-A- H09 222 010
- US-A- 5 678 402

## Beschreibung

Die Erfindung betrifft ein Verfahren zum Betreiben einer Verbrennungskraftmaschine, wobei ein von der Verbrennungskraftmaschine erzeugtes Abgas über einen in einem Abgaskanal angeordneten Partikelfilter sowie über eine 3-Wege-katalytische Beschichtung geführt wird.

Partikelfilter werden in Abgasanlagen von Verbrennungskraftmaschine eingesetzt, um partikuläre Bestandteile des Abgases wie Rußpartikel abzuscheiden. Während der Einsatz von Partikelfiltern bei Dieselmotoren bereits übliche Praxis ist, befindet sich ihre Verwendung für Ottomotoren noch in der Entwicklung.

Partikelfilter lagern Partikel so lange ein, bis der Füllstand des Filters seine Regeneration erfordert. Zu diesem Zweck wird nach derzeitigem Stand der Technik eine sauerstoffreiche Atmosphäre dargestellt, um den Abbrand des Filters zu ermöglichen. Soll die Verbrennungskraftmaschine im stöchiometrischen Betrieb bei Lambda = 1 gefahren werden, muss der nötige Sauerstoff durch zusätzliche Bauteile, wie Sekundärluftpumpen oder Umluftventile, in das Abgas eingebracht werden. Diese zusätzlichen Bauteile sind verbunden mit erhöhten Herstellungs- und Entwicklungskosten, erhöhtem Applikationsaufwand, erhöhtem Bauraumbedarf sowie einer Gewichtszunahme. Ohne diese Maßnahmen ist eine ausreichende Konvertierung sämtlicher limitierter Schadstoffe des Abgases nicht möglich. Als alternative Strategie kann der stöchiometrische Betrieb der Verbrennungskraftmaschine verlassen und diese mit einem mageren Luft-Kraftstoff-Gemisch betrieben werden, um die für die Dauer der Filterregeneration notwendige Sauerstoffkonzentration darzustellen. In diesem Fall ist eine quantitative NO_{X}-Konvertierung, beispielsweise an einem 3-Wege-Katalysator nicht mehr möglich.

Die Beladung des Partikelfilters zur Auslösung der Regeneration kann durch Messung geeigneter Zustandsparameter, insbesondere über eine Druckdifferenzmessung vor und hinter dem Partikelfilter erfolgen. Alternativ kann die Partikelbeladung über geeignete Kennfelder rechnerisch modelliert werden.

DE 10 2008 036 127 A1 beschreibt eine Strategie zur Regeneration eines Partikelfilters, insbesondere eines Ottomotors. Demnach wird der Motor mit seinem üblichen Lambdawert, beispielsweise bei einem stöchiometrischen Lambdawert betrieben und, wenn eine kritische. Filterbeladung festgestellt wird, ein Sauerstoffbedarf für die Regeneration bestimmt und die Lambdaregelung so in Richtung magerer Werte angepasst, dass der vorbestimmte Sauerstoffbedarf dargestellt wird. Nach Regenerationsende wird die Lambdaregelung wieder auf den üblichen Lambdawert eingestellt.

DE 102 61 877 A1 beschreibt ein Verfahren zur Regeneration eines Partikelfilters eines Dieselmotors, wonach die zur Einleitung der Regeneration notwendige Filtertemperatur durch zyklisches Schwingen des Lambdawertes um λ = 1 erzeugt wird. Dieser so genannte Wobble-Betrieb um λ = 1 wird solange fortgeführt, bis die Regeneration beendet ist, um die erhöhte Temperatur aufrechtzuerhalten.

DE 10 2008 034 992 A1 betrifft ein Verfahren zur Entschwefelung eines NO_{X}-Speicherkatalysators, dem ein Partikelfilter vorgeschaltet ist. Dabei wird die Verbrennungskraftmaschine während eines ersten Intervalls über einen Zeitraum von 40 oder 60 Sekunden mit einem fetten Luft-Kraftstoff-Gemisch betrieben, so dass in dieser Zeit ein Schwefelaustrag aus dem NO_{X}-Speicherkatalysator erfolgt. Während eines zweiten Intervalls wird die Verbrennungskraftmaschine für etwa 10 Sekunden auf einen mageren Lambdawert eingestellt, währenddessen der Partikelfilter regeneriert wird. Die beiden Intervalle werden solange wiederholt, bis die Entschwefelung des NO_{X}-Speicherkatalysators vollständig beendet ist.

DE 10 2006 017 300 A1 offenbart ein Verfahren zum makroskopisch gleichzeitigen Regeneration einer oxidierend arbeitenden Abgasreinigungseinrichtung, insbesondere eines Dieselpartikelfilters, und einer reduzierend arbeitenden Abgasreinigungseinrichtung, insbesondere eines NOx-Speicherkatalysators, indem ausgehend von einem mittleren Lämbda-Wert alternierend Oxidationsmittelüberschuss und Reduktionsmittelüberschuss zur Verfügung gestellt wird. Die Amplitude und das Taktverhältnis um den mittleren Lambda-Wert sind einstellbar.

US 5,678,402 und JP 09-222010 offenbaren jeweils ein Verfahren zum Anpassen der Frequenz und der Amplitude der Oszillation des Luft-Kraftstoff-Verhältnisses für eine optimale Reinigungsleistung des Katalysators. In US 5,678,402 werden die Frequenz und die Amplitude in Abhängigkeit von der Sauerstoffspeicherkapazität des Katalysators und der Abgasmenge festgelegt.

Es ist festzustellen, dass derzeit kein Konzept existiert, das bei geringem Aufwand eine gute Konvertierung sämtlicher limitierter Abgasschadstoffe, umfassend Partikel, Stickoxide, unverbrannte Kohlenwasserstoffe und Kohlenmonoxid, erlaubt. Obwohl sich derzeit stöchiometrisch betreibbare Dieselmotoren in der Entwicklung befinden, deren Abgasnachbehandlung nach dem Prinzip der bei Ottomotoren üblichen 3-Wege-Katalyse möglich wäre, erfordert die Regeneration ihrer Partikelfilter - wie oben beschrieben - entweder einen zusätzlichen apparativen Aufwand oder ein Verlassen des stöchiometrischen.

Somit liegt der vorliegenden Erfindung die Aufgabe zugrunde, ein Konzept bereitzustellen, das diese Nachteile des Standes der Technik überkommt.

Diese Aufgabe wird durch ein Verfahren sowie ein Steuergerät mit den Merkmalen der unabhängigen Ansprüche gelöst.

Nach dem erfindungsgemäßen Verfahren zum Betreiben einer Verbrennungskraftmaschine wird ein von der Verbrennungskraftmaschine erzeugtes Abgas über einen Partikelfilter sowie über eine 3-Wege-katalytische Beschichtung geführt. Dabei ist erfindungsgemäß vorgesehen, dass ein der Verbrennungskraftmaschine zugeführtes Luft-Kraftstoff-Gemisch auf ein im Wesentlichen stöchiometrisches Luft-Kraftstoff-Verhältnis mit einem mittleren Lambdawert von λₘ = 1 ± 0,01 eingestellt wird und das Luft-Kraftstoff-Verhältnis mit einer vorbestimmten Schwingungsfrequenz und einer vorbestimmten Schwingungsamplitude um den mittleren Lambdawert periodisch alternierend in Richtung eines Magerlambdawertes und eines Fettlambdawertes ausgelenkt wird, wobei die Schwingungsfrequenz und die Schwingungsamplitude so gewählt werden, dass der Partikelfilter quasi-kontinuierlich regeneriert wird.

Durch die erfindungsgemäße Schwingung des Lambdawertes um den stöchiometrischen mittleren Lambdawert wird einerseits erreicht, dass während der mageren Lambdaamplituden der Partikelfilter mit Sauerstoff beaufschlagt wird, die eine Regeneration der in den fetten Lambdaamplituden eingelagerten Partikel ermöglicht. Mit anderen Worten werden Schwingungsfrequenz und Schwingungsamplitude so gewählt, dass praktisch keine Einlagerung von Partikeln (außer in den kurzen Fettamplituden) in den Partikelfilter erfolgt, das heißt, dass die in einer Fettamplitude eingelagerten Partikel in der nachfolgenden Mageramplitude bereits wieder regeneriert werden. Demzufolge werden die Schwingungsfrequenz und die Schwingungsamplitude der Lambdaregelung so gewählt, dass eine Partikelbeladung des Partikelfilters im Wesentlichen konstant und auf einem sehr niedrigen Niveau bleibt. Vorzugsweise werden Schwingungsfrequenz und Schwingungsamplitude so gewählt, dass eine Partikelbeladung des Partikelfilters von 50 % seiner maximalen Beladung, insbesondere von 30 % seiner maximalen Beladung, vorzugsweise von 10 % seiner maximalen Beladung, nicht überschritten wird.

Neben der quasi-kontinuierlichen Bereitstellung von Sauerstoff für den Partikelabbrand am Filter ermöglicht das erfindungsgemäße Verfahren, dass die notwendige Abgas- und Filtertemperatur überwiegend erreicht wird, die für die Regeneration Vorraussetzung ist.

Eine Bestimmung der Beladung des Partikelfilters, die im Stand der Technik zur Steuerung seiner Regeneration erforderlich ist, ist im erfindungsgemäßen Verfahren entbehrlich und wird demzufolge vorzugsweise nicht durchgeführt. Ein Vorteil des erfindungsgemäßen Verfahrens ist darin zu sehen, dass der Betrieb der Verbrennungskraftmaschine nicht wie im Stand der Technik üblich diskontinuierlich erfolgt, wobei der Standardbetrieb durch Regenerationsintervalle unterbrochen werden muss. Vielmehr kann der im Wesentlichen stöchiometrische Betrieb der Verbrennungskraftmaschine über praktisch den gesamten Betriebsbereich aufrechterhalten werden. Eine dementsprechend bevorzugte Ausführung des Verfahrens sieht vor, dass in Abhängigkeit des Lastkollektives der im Wesentlichen stöchiometrische Betrieb typischerweise über mindestens 20 % aller Betriebspunkte des gesamten Betriebsbereichs der Verbrennungskraftmaschine, insbesondere über mindestens 30 % aller Betriebspunkte, vorzugsweise über mindestens 50 % aller Betriebspunkte, aufrechterhalten wird. In besonders bevorzugter Ausführung wird der stöchiometrische Betrieb über den gesamten Betriebsbereich beibehalten, d.h. über den Niedriglast-, den Mittellast- und Volllastbereich. Ein kurzzeitiges Verlassen des im Wesentlichen stöchiometrischen Betriebs kann allenfalls aus thermischen Gründen nötig werden, etwa um Überhitzung verschiedener Bauteile zu vermeiden.

Neben der Forderung, die Schwingungsfrequenz und die Schwingungsamplitude so auszulegen, dass die quasi-kontinuierliche Partikelfilterregeneration gewährleistet ist, werden in bevorzugter Ausführung der Erfindung diese beiden Größen so gewählt, dass gleichzeitig an der 3-Wege-katalytischen Beschichtung eine Mindestkonvertierungsrate von unverbrannten Kohlenwasserstoffen HC und/oder Kohlenmonoxid CO und/oder Stickoxiden NO_{X} vorliegt. Vorzugsweise wird die Mindestkonvertierungsrate sämtlicher der vorgenannten limitierten Schadstoffe eingehalten. Dabei erfolgt während der fetten sowie stöchiometrischen Phasen der Lambdaschwingung einer Reduktion der Stickoxidemissionen, während die Kohlenwasserstoff- und Kohlenmonoxidemissionen während der mageren und stöchiometrischen Phasen der Lambdaschwingung erfolgt. Auf diese Weise sichert das erfindungsgemäße Verfahren nicht nur eine kontinuierliche Reduzierung der Partikelemissionen, sondern auch eine kontinuierliche Reduktion von NOx sowie eine kontinuierliche Oxidation von HC und CO.

Gemäß bevorzugter Ausführung des Verfahrens wird die Schwingungsfrequenz in Abhängigkeit von einem aktuellen Betriebspunkt der Verbrennungskraftmaschine, insbesondere in Abhängigkeit von der aktuellen Motorlast und/oder der aktuellen Motordrehzahl bestimmt. Zu diesem Zweck können Kennfelder vorgesehen sein, aus denen die Schwingungsfrequenz last- und drehzahlabhängig ermittelt werden kann. Insbesondere wird die Schwingungsfrequenz mit zunehmender Motorlast und Motordrehzahl angepasst, damit die bei höheren Motorlasten und Motordrehzahlen höheren Emissionen umgesetzt werden können.

In diesem Zusammenhang ist eine Schwingungsamplitude im Bereich von ± 5 %, insbesondere von ± 2 %, bezogen auf den im Wesentlichen stöchiometrischen mittleren Lambdawert bevorzugt. Dies bedeutet beispielsweise bei einem mittleren Lambdawert von λₘ = 1 und einer Schwingungsamplitude von ± 5 % eine Schwingung des Lambdawertes zwischen dem Fettlambdawert λ_{F} = 0,95 und dem Magerlambdawert λ_{M} = 1,05.

Es ist ferner bevorzugt vorgesehen, dass die Schwingungsamplitude in Abhängigkeit von einer Sauerstoffspeicherkapazität (OSC für oxygen storage capacity) der 3-Wege-katalytischen Beschichtung bestimmt wird. Dabei wird insbesondere mit steigender Sauerstoffspeicherkapazität der 3-Wege-Beschichtung die Schwingungsamplitude, und / oder - frequenz, das heißt die Größe und/oder Dauer der Ausschläge in Richtung fetter und magerer Lambdawerte, größer gewählt. Somit ist sichergestellt, dass die während der Magerintervalle relativ große Sauerstoffmasse vollständig in die 3-Wege-katalytische Beschichtung eingelagert werden kann und während der Fettintervalle zur Reduzierung von HC und CO verbraucht werden kann.

Als ein in diesem Sinn vorteilhafter Bereich für die Schwingungsfrequenz haben sich Werte von 0,01 bis 2 Hz, insbesondere im Bereich von 0,2 bis 1 Hz, erwiesen.

Die 3-Wege-katalytische Beschichtung kann in Form einer Beschichtung eines separaten Katalysators vorliegen, vorzugsweise als Beschichtung eines dem Partikelfilter nachgeschalteten Katalysators (3-Wege-Katalysator). In alternativer Ausgestaltung kann die 3-Wege-katalytische Beschichtung jedoch auch in Form einer Beschichtung des Partikelfilters selbst ausgeführt sein.

Ein weiterer Aspekt der vorliegenden Erfindung betrifft ein Steuergerät zur Steuerung eines Betriebs einer Verbrennungskraftmaschine, das zur Ausführung des erfindungsgemäßen Verfahrens eingerichtet ist. Zu diesem Zweck kann das Steuergerät einen computerlesbaren Steuerungsalgorithmus zur Durchführung des Verfahrens enthalten. In vorteilhafter Ausgestaltung ist das Steuergerät integraler Bestandteil des Motorsteuergeräts.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematischer Aufbau einer Verbrennungskraftmaschine mit einer Abgasanlage gemäß der Erfindung;
- Figur 2: zeitlicher Verlauf des Abgaslambdas stromauf des Partikelfilters (λ_{vor_PF}) und stromab des 3-Wege-Katalysators (λ_{nach_3-Wege-Kat}) und
- Figur 3: zeitliche Verläufe der Druckdifferenz (Druckabfall) mit Lambdaschwingung gemäß der Erfindung und ohne Lambdaschwingung sowie der Schwingungsamplitude.

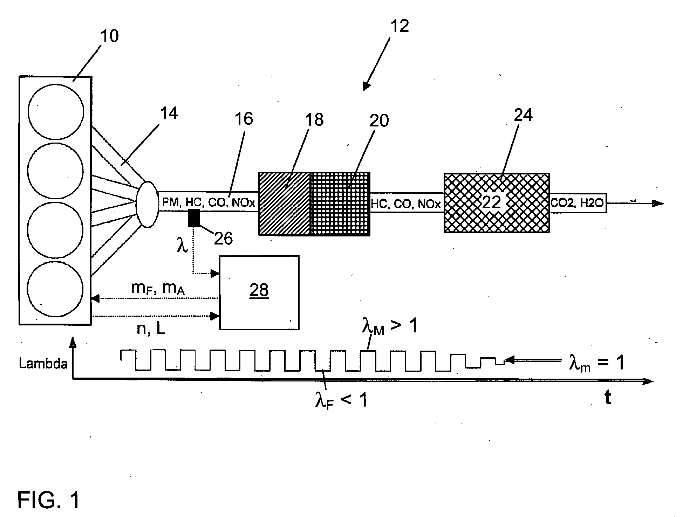

Figur 1 zeigt schematisch den Aufbau einer Verbrennungskraftmaschine 10 mit einer nachgeschalteten, hier insgesamt mit 12 bezeichneten Abgasanlage. Die Verbrennungskraftmaschine 10 kann ein fremdgezündeter Motor (Ottomotor) oder ein selbstzündender Motor (Dieselmotor) sein. Hinsichtlich ihrer Kraftstoffzuführung kann sie über eine direkteinspritzende Kraftstoffzufuhr verfügen, also mit innerer Gemischbildung arbeiten, oder über eine Kraftstoffvoreinspritzung verfügen und damit mit äußerer Gemischbildung arbeiten. Darüber hinaus kann die Verbrennungskraftmaschine 10 homogen betrieben werden, wobei in dem gesamten Brennraum eines Zylinders ein homogenes Luft-Kraftstoff-Gemisch zum Zündzeitpunkt vorliegt, oder in einem inhomogenen Modus (Schichtladebetrieb), bei dem zum Zündzeitpunkt ein vergleichsweise fettes Luft-Kraftstoff-Gemisch, insbesondere im Bereich einer Zündkerze, vorliegt, das im übrigen Brennraum von einem sehr mageren Gemisch umgeben wird. Wichtig im Rahmen der vorliegenden Erfindung ist, dass die Verbrennungskraftmaschine 10 mit einem im Wesentlichen stöchiometrischen Luft-Kraftstoff-Gemisch betrieben werden kann, das heißt mit einem Gemisch mit einem Lambdawert nahe oder gleich 1. Besonders bevorzugt ist im Rahmen der vorliegenden Erfindung die Verbrennungskraftmaschine 10 als ein stöchiometrisch betreibbarer Dieselmotor ausgestaltet.

Die Abgasanlage 12 umfasst einen Abgaskrümmer 14, welcher das Abgas der einzelnen Zylinder der Verbrennungskraftmaschine 10 in einen Abgaskanal 16 zusammenführt.

In dem Abgaskanal 16 können verschiedene Abgasreinigungskomponenten vorhanden sein. Wesentlich im Rahmen der vorliegenden Erfindung ist ein Partikelfilter 20, welcher feste oder flüssige Partikel des Abgases (PM) zurückhält. Aufbau und Funktionsweise von Partikelfiltern sind im Stand der Technik hinreichend bekannt und bedürfen keiner näheren Erläuterung.

Das Abgas der Verbrennungskraftmaschine 10 wird ferner über eine 3-Wege-katalytische Beschichtung 22 geführt, welche im dargestellten Beispiel als eine Beschichtung eines dem Partikelfilter 22 nachgeschalteten Katalysators (3-Wege-Katalysator 24) vorliegt. Die 3-Wege-katalytische Beschichtung 22 kann eine Washcoat-Beschichtung auf einem Katalysatorträger sein, welche ein poröses, Oberflächen vergrößerndes Material, beispielsweise Al₂O₃, aufweist sowie eine katalytisch wirksame Komponente, die typischerweise die Edelmetalle Platin, Rhodium und/oder Palladium umfasst. Der Washcoat umfasst ferner eine Sauerstoffspeicherkomponente, beispielsweise Ceroxid (CeO₂) und/oder Zirkoniumoxid (ZrO₂), welche die Sauerstoffspeicherkapazität (OSC für *oxygen storage capacity*) der 3-Wege-katalytischen Beschichtung 22 beziehungsweise des 3-Wege-Katalysators 24 bestimmt. Der Katalysatorträger kann beispielsweise gewickelte Metallfolien umfassen oder als keramischer Träger ausgestaltet sein. Bei einer stöchiometrischen oder leicht fetten Abgasatmosphäre vermag die 3-Wege-katalytische Beschichtung 22 Stickoxide NOₓ zu Stickstoff N₂ und Sauerstoff O₂ zu reduzieren. Bei stöchiometrischem oder leicht magerem Betrieb oxidiert sie unverbrannte Kohlenwasserstoffe HC und Kohlenmonoxid CO zu Kohlendioxid CO₂ und Wasser H₂O. Bei im Wesentlichen stöchiometrischer Abgasatmosphäre, das heißt bei einem λ von 1 oder nahe 1, laufen diese Umsätze praktisch vollständig ab. Derartige katalytische Beschichtungen sind im Stand der Technik aus der Abgasnachbehandlung von Ottomotoren bekannt und üblich.

In Abwandlung zu der in Figur 1 dargestellten Ausführungsvariante kann die katalytische Beschichtung 22 auch als Beschichtung des Partikelfilters 20 vorliegen, wobei sie entweder nur einen insbesondere stromabwärtigen Bereich des Partikelfilters 22 bedeckt oder aber als gleichmäßige Beschichtung des gesamten Partikelfilters 20 ausgestaltet ist.

In weiterer optionaler Ausgestaltung kann die Abgasanlage 12 ferner einen Oxidationskatalysator 18 aufweisen, der in der gezeigten Darstellung dem Partikelfilter 20 vorgeschaltet ist. Alternativ kann statt eines separaten Oxidationskatalysators 18 der Partikelfilter 20 mit einer oxidationskatalytischen Beschichtung ausgestattet sein.

Der Abgaskanal 16 kann verschiedene Sensoren, insbesondere Gas- und Temperatursensoren enthalten. Dargestellt ist vorliegend eine Lambdasonde 26, die an einer motornahen Position im Abgaskanal 16 angeordnet ist. Die Lambdasonde 26 kann als Sprungantwortlambdasonde oder als Breitbandlambdasonde ausgestaltet sein und ermöglicht in bekannter Weise die Lambdaregelung des Verbrennungsmotors 10, wofür sie den Sauerstoffgehalt des Abgases misst.

Die von den verschiedenen Sensoren erfassten Signale, insbesondere das mit der Lambdasonde gemessene Abgaslambda gehen in ein Steuergerät 28 ein. Desgleichen werden verschiedene Parameter der Verbrennungskraftmaschine 10, insbesondere die Motordrehzahl n sowie die Motorlast L von dem Steuergerät 28 eingelesen. In Abhängigkeit der verschiedenen Signale steuert das Steuergerät 28 den Betrieb der Verbrennungskraftmaschine 10, wobei sie insbesondere die Kraftstoffzufuhr sowie die Luftzufuhr so steuert, dass eine gewünschte Kraftstoffmasse m_{F} und eine gewünschte Luftmasse m_{A} zugeführt werden, um ein gewünschtes Luft-Kraftstoff-Gemisch (das Abgas-Solllambda) darzustellen. Das Luft-Kraftstoff-Gemisch wird in Abhängigkeit von dem Betriebspunkt der Verbrennungskraftmaschine 10, insbesondere der Motordrehzahl n sowie der Motorlast L aus Kennfeldern ermittelt.

Erfindungsgemäß ist nunmehr vorgesehen, dass die Verbrennungskraftmaschine 10 kontinuierlich mit einem im Wesentlichen stöchiometrischen mittleren Lambdawert λₘ betrieben wird, wobei das der Verbrennungskraftmaschine 10 zugeführte Luft-Kraftstoff-Verhältnis mit einer vorbestimmten Schwingungsfrequenz und einer vorbestimmten Schwingungsamplitude um diesen mittleren Lambdawert λₘ periodisch alternierend in Richtung eines Magerlambdawertes λ_{M} und eines Fettlambdawertes λ_{F} ausgelenkt wird. Dabei werden die Schwingungsfrequenz und die Schwingungsamplitude so gewählt, dass der Partikelfilter 20 quasi-kontinuierlich regeneriert wird. Diese Vorgehensweise ist im unteren Teil der Figur 1 angedeutet, wo der motorische Lambdawert (Solllambda) gegen die Zeit aufgetragen ist.

Dabei wird vorliegend unter einem kontinuierlichen stöchiometrischen Betrieb der Verbrennungskraftmaschine 10 verstanden, dass diese nicht zwischen einem Standardbetriebsmodus und einem Regenerationsbetriebsmodus wie im Stand der Technik üblich hin- und hergeschaltet wird, sondern praktisch über ihren gesamten Betriebsbereich in dem dargestellten stöchiometrischen Betrieb mit der Lambdaschwingung betrieben wird. Vorzugsweise wird die Verbrennungskraftmaschine über zumindest 98 % aller in dem Betriebskennfeld des Steuergeräts 28 gespeicherten Betriebspunkte in dem dargestellten stöchiometrischen Betrieb gefahren und dieser wird nicht durch Regenerationsintervalle unterbrochen.

Ferner wird unter dem Begriff quasi-kontinuierliche Regeneration des Partikelfilters 20 verstanden, dass sein Beladungszustand im Wesentlichen konstant und insbesondere auf einem äußerst geringen Niveau bleibt. Dies bedeutet, dass im Zeitmittel während eines Zeitintervalls im Größenbereich weniger Lambdaschwingungen keine zunehmende Beladung des Filters 20 stattfindet. Vorzugsweise wird eine Grenze von höchstens 50 % der maximalen Beladung der Partikelfilters 20 nicht überschritten.

Die Schwingungsfrequenz und die Schwingungsamplitude werden ferner so gewählt, dass an der 3-Wege-katalytischen Beschichtung 22 eine Mindestkonvertierungsrate von unverbrannten Kohlenwasserstoffen (HC) und/oder Kohlenmonoxid (CO) und/oder Stickoxiden (NO_{X}) vorliegt, wobei sich Mindestkonvertierungsrate an gesetzlichen Grenzwerten orientieren kann.

Vorzugsweise wird die Schwingungsfrequenz in Abhängigkeit von einem aktuellen Betriebspunkt der Verbrennungskraftmaschine 10, insbesondere in Abhängigkeit von der Motorlast L und/oder Motordrehzahl n, bestimmt. Vorteilhaft ist in diesem Zusammenhang eine Schwingungsfrequenz im Bereich von 0,01 bis 2 Hz, insbesondere im Bereich von 0,2 bis 1 Hz.

Auf der anderen Seite wird die Schwingungsamplitude in Abhängigkeit von der OSC der 3-Wege-katalytischen Beschichtung bestimmt, wobei sich hier Amplituden im Bereich von bis zu ± 5 %, insbesondere von bis zu ± 3 %, bezogen auf den mittleren Lambdawert λₘ als bevorzugt erwiesen haben.

Es bestehen mehrere Möglichkeiten der Lambdamodulation. Beispielsweise kann diese wie in Figur 1 dargestellt in Form einer Rechteckkurve erfolgen. Ebenso geeignet ist aber auch ein Sägezahnverlauf oder ein sinusförmiger Verlauf.

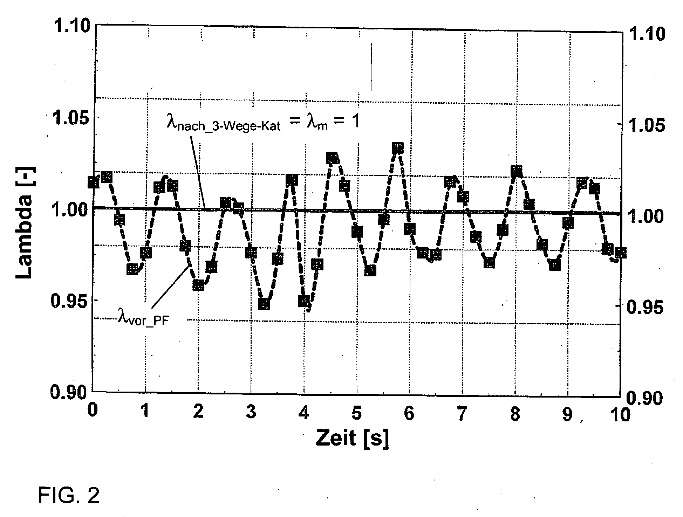

Figur 2 zeigt ein Beispiel zeitlicher Verläufe des Abgaslambdas stromauf des Partikelfilters 20 sowie stromab des 3-Wege-Katalysators 24 mit der Lambdasonde 26, bei Betrieb der Verbrennungskraftmaschine 10 mit der erfindungsgemäßen Verfahrensführung mit auf motorischer Seite sinusförmig modulierter Lambdaschwingung. Es ist ersichtlich, dass vor dem Partikelfilter 20 sich das motorisch eingestellte Lambdaverhalten praktisch direkt widerspiegelt, das heißt der Abgaslambdawert schwingt um den mittleren Lambdawert von 1 und weist somit Auslenkungen in Richtung magerer Lambdawerte und Auslenkungen in Richtung fetter Lambdawerte auf. Während den mageren Auslenkungen erfolgt eine Zufuhr von leichtem Sauerstoffüberschuss in den Partikelfilter 20, der die Regeneration der während der fetten Auslenkungen eingelagerten Partikel ermöglicht.

Ersichtlich ist ferner, dass das stromab des 3-Wege-Katalysators 24 gemessene Abgaslambda kontinuierlich gleich 1, also stöchiometrisch ist und somit das mittlere Abgaslambda widerspiegelt.

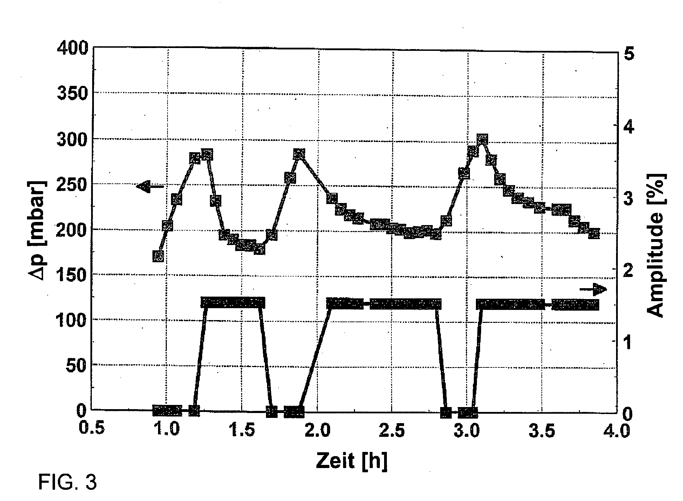

In einem Versuch wurde die Verbrennungskraftmaschine 10 in der erfindungsgemäßen Weise betrieben, also mit dem stöchiometrischen Betrieb mit periodischer Lambdamodulation um λₘ = 1. Dieser Betrieb wurde in kurzzeitigen Intervallen durch einen konstant stöchiometrischen Betrieb ohne Lambdaschwingung unterbrochen. Während der gesamten Versuchsdauer wurde der Druckabfall über den Partikelfilter 20 gemessen. Das Ergebnis ist in Figur 3 dargestellt, in welcher der untere Verlauf die Schwingungsamplitude zeigt und der obere Verlauf den Differenzdruck Δp über dem Partikelfilter 20. Es ist erkennbar, dass in den konstant stöchiometrischen Intervallen (Amplitude = 0) ein zunehmender Druckabfall über den Filter zu beobachten ist, was seine zunehmende Beladung anzeigt. Auf der anderen Seite führt die erfindungsgemäße Lambdaschwingung mit einer Schwingungsamplitude von hier beispielsweise 1,5 % zu einer raschen Abnahme des Druckabfalls, d.h. zu einer effektiven Regeneration des Partikelfilters 20, bis der Differenzdruck eines praktisch partikelfreien Filters erreicht wird.

Zusammenfassend kann festgestellt werden, dass die erfindungsgemäße Verfahrensführung folgende Effekte hervorruft:
- kontinuierliche Regeneration des Partikelfilters durch Oxidation der Partikel durch die mageren Intervalle der Lambdaschwingung und durch die stets ausreichende Abgas- und Filtertemperatur, verbunden mit einer kontinuierlichen Reduzierung der Partikelemissionen
- kontinuierliche Reduktion der Stickoxide in den fetten und stöchiometrischen Phasen der Lambdaschwingung
- kontinuierliche Oxidation von Kohlenwasserstoffen und Kohlenmonoxid in den mageren und stöchiometrischen Phasen der Lambdaschwingung

Da der erfindungsgemäße stöchiometrische Betrieb der Verbrennungskraftmaschine nie zu Regenerationszwecken des Partikelfilters verlassen werden muss, entsteht kein Verlust der Funktionsfähigkeit des 3-Wege-Katalysator in den Phasen der sonst üblichen Regeneration. In allen Betriebspunkten können somit strenge Grenzwerte eingehalten werden. Insbesondere ermöglicht die Erfindung, auch bei Dieselmotoren einen kontinuierlich stöchiometrischen Betrieb und den Einsatz herkömmlicher 3-Wege-Katalysatoren.

### Bezugszeichenliste

- 10: Verbrennungskraftmaschine
- 12: Abgasanlage
- 14: Abgaskrümmer
- 16: Abgaskanal
- 18: Oxidationskatalysator
- 20: Partikelfilter
- 22: 3-Wege-kataytische Beschichtung
- 24: 3-Wege-Katalysator
- 26: Lambdasonde
- 28: Steuergerät

- λₘ: mittlerer Lambdawert
- λ_{M}: Magerlambdawert
- λ_{F}: Fettlambdawert
- n: Motordrehzahl
- L: Motorlast
- m_{F}: Kraftstoffmasse
- m_{A}: Luftmasse

## Patentansprüche

1. Verfahren zum Betreiben einer Verbrennungskraftmaschine (10), wobei ein von der Verbrennungskraftmaschine (10) erzeugtes Abgas über einen Partikelfilter (20) sowie über eine 3-Wege-katalytische Beschichtung (22) geführt wird, **dadurch gekennzeichnet, dass** ein der Verbrennungskraftmaschine (10) zugeführtes Luft-Kraftstoff-Gemisch auf ein im Wesentlichen stöchiometrisches Luft-Kraftstoff-Verhältnis mit einem mittleren Lambdawert von λₘ = 1 ± 0,01 eingestellt wird und das Luft-Kraftstoff-Verhältnis mit einer vorbestimmten Schwingungsfrequenz und einer vorbestimmten Schwingungsamplitude um den mittleren Lambdawert λₘ periodisch alternierend in Richtung eines Magerlambdawertes λ_{M} und eines Fettlambdawertes λ_{F} ausgelenkt wird, wobei die Schwingungsfrequenz und die Schwingungsamplitude so gewählt werden, dass der Partikelfilter (20) quasi-kontinuierlich regeneriert wird.

2. Verfahren nach Anspruch 1, **dadurch gekennzeichnet, dass** die Schwingungsfrequenz und die Schwingungsamplitude so gewählt werden, dass eine Partikelbeladung des Partikelfilters (20) im Wesentlichen konstant bleibt.

3. Verfahren nach Anspruch 1 oder 2, **dadurch gekennzeichnet, dass** die Schwingungsfrequenz und die Schwingungsamplitude so gewählt werden, dass eine Partikelbeladung des Partikelfilters (20) 50 % einer maximalen Beladung, insbesondere 30 % einer maximalen Beladung, vorzugsweise 10 % maximalen Beladung, nicht überschreitet.

4. Verfahren nach einem der vorhergehenden Ansprüche, **dadurch gekennzeichnet, dass** der im Wesentlichen stöchiometrische Betrieb der Verbrennungskraftmaschine (10) über mindestens 20 % aller Betriebspunkte, insbesondere über mindestens 30 % aller Betriebspunkte, vorzugsweise über mindestens 50 % aller Betriebspunkte, aufrechterhalten wird.

5. Verfahren nach einem der vorhergehenden Ansprüche, **dadurch gekennzeichnet, dass** die Schwingungsfrequenz und die Schwingungsamplitude so gewählt werden, dass an der 3-Wege-katalytischen Beschichtung (22) eine Mindestkonvertierungsrate von unverbrannten Kohlenwasserstoffen (HC) und/oder Kohlenmonoxid (CO) und/oder Stickoxiden (NO_{X}) vorliegt.

6. Verfahren nach einem der vorhergehenden Ansprüche, **dadurch gekennzeichnet, dass** die Schwingungsfrequenz in Abhängigkeit von einem aktuellen Betriebspunkt der Verbrennungskraftmaschine (10), insbesondere in Abhängigkeit von der Motorlast und/oder Motordrehzahl, bestimmt wird.

7. Verfahren nach einem der vorhergehenden Ansprüche, **dadurch gekennzeichnet, dass** die Schwingungsfrequenz im Bereich von 0,01 bis 2 Hz, insbesondere im Bereich von 0,2 bis 1 Hz, liegt.

8. Verfahren nach einem der vorhergehenden Ansprüche, **dadurch gekennzeichnet, dass** die Schwingungsamplitude in Abhängigkeit von einer Sauerstoffspeicherkapazität der 3-Wege-katalytischen Beschichtung (22) bestimmt wird.

9. Verfahren nach einem der vorhergehenden Ansprüche, **dadurch gekennzeichnet, dass** die Schwingungsamplitude im Bereich von bis zu ± 5 %, insbesondere von bis zu ± 2 %, bezogen auf den mittleren Lambdawert λₘ liegt.

10. Verfahren nach einem der Ansprüche 1 bis 9, **dadurch gekennzeichnet, dass** die 3-Wege-katalytische Beschichtung als Beschichtung (22) eines dem Partikelfilter (20) nachgeschalteten Katalysators (24) vorliegt.

11. Verfahren nach einem der Ansprüche 1 bis 9, **dadurch gekennzeichnet, dass** die 3-Wege-katalytische Beschichtung (22) als Beschichtung des Partikelfilters (20) vorliegt.

12. Steuergerät (42) zur Steuerung eines Betriebs einer Verbrennungskraftmaschine (10), das zur Ausführung des Verfahrens nach einem der Ansprüche 1 bis 11 eingerichtet ist.

## Claims

1. Method for operating an internal combustion engine (10), wherein an exhaust gas which is generated by the internal combustion engine (10) is conducted via a particle filter (20) and via a 3-way catalytic coating (22), **characterized in that** an air-fuel mixture which is fed to the internal combustion engine (10) is set to an essentially stoichiometric air-fuel ratio with an average lambda value of λₘ = 1 ± 0.01, and the air-fuel ratio is deflected with a predetermined oscillation frequency and a predetermined oscillation amplitude about the average lambda value λₘ in a periodically alternating fashion in the direction of a lean lambda value λ_{M} and a rich lambda value λ_{F}, wherein the oscillation frequency and the oscillation amplitude are selected in such a way that the particle filter (20) is regenerated quasi-continuously.

2. Method according to Claim 1, **characterized in that** the oscillation frequency and the oscillation amplitude are selected in such a way that a particle charge of the particle filter (20) remains essentially constant.

3. Method according to Claim 1 or 2, **characterized in that** the oscillation frequency and the oscillation amplitude are selected in such a way that a particle charge of the particle filter (20) does not exceed 50% of a maximum charge, in particular 30% of a maximum charge, preferably 10% of a maximum charge.

4. Method according to one of the preceding claims, **characterized in that** the essentially stoichiometric operating mode of the internal combustion engine (10) is maintained over at least 20% of all operating points, in particular over at least 30% of all operating points, preferably over at least 50% of all operating points.

5. Method according to one of the preceding claims, **characterized in that** the oscillation frequency and oscillation amplitude are selected such that a minimum conversion rate of unburnt hydrocarbons (HC) and/or carbon monoxide (CO) and/or nitrogen oxides (NOx) is present on the 3-way-catalytic coating (22).

6. Method according to one of the preceding claims, **characterized in that** the oscillation frequency is determined as a function of a current operating point of the internal combustion engine (10), in particular as a function of the engine load and/or engine speed.

7. Method according to one of the preceding claims, **characterized in that** the oscillation frequency is in the range from 0.01 to 2 Hz, in particular in the range from 0.2 to 1 Hz.

8. Method according to one of the preceding claims, **characterized in that** the oscillation amplitude is determined as a function of an oxygen storage capacity of the 3-way catalytic coating (22).

9. Method according to one of the preceding claims, **characterized in that** the oscillation amplitude is in the region of up to ±5%, in particular of up to ±2%, with respect to the average lambda value λₘ.

10. Method according to one of Claims 1 to 9, **characterized in that** the 3-way catalytic coating is present as a coating (22) of a catalytic converter (24) which is connected downstream of the particle filter (20).

11. Method according to one of Claims 1 to 9, **characterized in that** the 3-way catalytic coating (22) is present as a coating of the particle filter (20).

12. Control device (42) for controlling the operation of an internal combustion engine (10) which is configured to carry out the method according to one of Claims 1 to 11.

## Revendications

1. Procédé pour faire fonctionner un moteur à combustion interne (10), un gaz d'échappement produit par le moteur à combustion interne (10) étant guidé par le biais d'un filtre à particules (20) ainsi que par le biais d'un revêtement catalytique à 3 voies (22), **caractérisé en ce qu'**un mélange de carburant et d'air acheminé au moteur à combustion interne (10) est ajusté à un rapport de carburant et d'air essentiellement stoechiométrique ayant une valeur lambda moyenne de λₘ = 1 ± 0,01 et le rapport de carburant et d'air est dévié avec une fréquence d'oscillation prédéterminée et une amplitude d'oscillation prédéterminée autour de 1a valeur lambda moyenne λₘ en alternant de manière périodique dans la direction d'une valeur lambda pauvre λ_{M} et d'une valeur lambda riche λ_{F}, la fréquence d'oscillation et l'amplitude d'oscillation étant choisies de telle sorte que le filtre à particules (20) soit régénéré de manière quasiment continue.

2. Procédé selon la revendication 1, **caractérisé en ce que** la fréquence d'oscillation et l'amplitude d'oscillation sont choisies de telle sorte qu'une charge des particules du filtre à particules (20) reste essentiellement constante.

3. Procédé selon la revendication 1 ou 2, **caractérisé en ce que** la fréquence d'oscillation et l'amplitude d'oscillation sont choisies de telle sorte qu'une charge des particules du filtre à particules (20) ne dépasse pas 50 % d'une charge maximale, notamment 30 % d'une charge maximale, de préférence 10 % d'une charge maximale.

4. Procédé selon l'une quelconque des revendications précédentes, **caractérisé en ce que** le fonctionnement essentiellement stoechiométrique du moteur à combustion interne (10) est maintenu sur au moins 20 % de tous les points de fonctionnement, en particulier sur au moins 30 % de tous les points de fonctionnement, de préférence sur au moins 50 % de tous les points de fonctionnement.

5. Procédé selon l'une quelconque des revendications précédentes, **caractérisé en ce que** la fréquence d'oscillation et l'amplitude d'oscillation sont choisies de telle sorte qu'au niveau du revêtement catalytique à 3 voies (22), il existe un taux de conversion minimum des hydrocarbures non brûlés (HC) et/ou du monoxyde de carbone (CO) et/ou des oxydes d'azote (NOx).

6. Procédé selon l'une quelconque des revendications précédentes, **caractérisé en ce que** la fréquence d'oscillation est déterminée en fonction d'un point de fonctionnement actuel du moteur à combustion interne (10), en particulier en fonction de la charge du moteur et/ou du régime du moteur.

7. Procédé selon l'une quelconque des revendications précédentes, **caractérisé en ce que** la fréquence d'oscillation est comprise dans une plage de 0,01 à 2 Hz, en particulier dans une plage de 0,2 à 1 Hz.

8. Procédé selon l'une quelconque des revendications précédentes, **caractérisé en ce que** l'amplitude d'oscillation est déterminée en fonction d'une capacité de stockage d'oxygène du revêtement catalytique à 3 voies (22).

9. Procédé selon l'une quelconque des revendications précédentes, **caractérisé en ce que** l'amplitude d'oscillation est comprise dans une plage allant jusqu'à ± 5 %, en particulier allant jusqu'à ± 2 %, par rapport à la valeur lambda moyenne λₘ.

10. Procédé selon l'une quelconque des revendications 1 à 9, **caractérisé en ce que** le revêtement catalytique à 3 voies se présente sous la forme d'un revêtement (22) d'un catalyseur (24) monté en aval du filtre à particules (20).

11. Procédé selon l'une quelconque des revendications 1 à 9, **caractérisé en ce que** le revêtement catalytique à 3 voies (22) se présente sous la forme d'un revêtement du filtre à particules (20).

12. Appareil de commande (42) pour commander le fonctionnement d'un moteur à combustion interne (10) qui est prévu pour mettre en oeuvre le procédé selon l'une quelconque des revendications 1 à 11.
